# EUROPÄISCHE PATENTSCHRIFT

(11) **EP 2 643 119 B1**
(45) Veröffentlichungstag und Bekanntmachung des Hinweises auf die Patenterteilung: **20.09.2017**
(21) Anmeldenummer: 11784691.5
(22) Anmeldetag: 21.11.2011
(51) Int. Cl.: B23K 20/10

(54) **VORRICHTUNG ZUM TORSIONALEN VERSCHWEISSEN VON METALLTEILEN MITTELS ULTRASCHALL**
DEVICE FOR TORSIONALLY WELDING METAL PARTS BY MEANS OF ULTRASOUND
DISPOSITIF POUR LE SOUDAGE PAR TORSION DE PIÈCES MÉTALLIQUES AU MOYEN D'ULTRASONS

(30) Priorität: 25.11.2010 EP 10192554
(43) Veröffentlichungstag der Anmeldung: 02.10.2013
(60) Teilanmeldung: 17179548.7
(73) Patentinhaber: Telsonic Holding AG, 9552 Bronschhofen (CH)
(72) Erfinder: LANG, Georg, 97855 Tiefenstein (DE); BÜTTIKER, Albert, CH-9533 Kirchberg (CH)
(74) Vertreter: Hepp Wenger Ryffel AG
(86) Internationale Anmeldenummer: PCT/EP2011/070558
(87) Internationale Veröffentlichungsnummer: WO 2012/069413

(56) Entgegenhaltungen:
- WO-A1-95/23668
- DE-A1- 4 410 218
- DE-A1- 19 810 621
- US-A- 4 782 990
- US-A1- 2006 231 585
- US-A1- 2008 128 471

## Beschreibung

Die Erfindung betrifft eine Vorrichtung zum Ultraschallschweissen mit den Merkmalen des Oberbegriffs des Anspruchs 1 (siehe, z.B., WO 95/23668 A1). Die Erfindung betrifft allgemein eine Vorrichtung zum Verschweissen von Kabeln wie beispielsweise Litzen. Die Erfindung betrifft auch ein mobiles Schweissgerät zum Ultraschallschweissen mit einer solchen Vorrichtung, siehe Ansprüche 12-13. Als Kabel werden im vorliegenden Sinne Kabel mit einer oder mehreren Litzen sowie einzelne Drähte oder elektrisch leitende Seile verstanden. Ein Kabel kann grundsätzlich aber auch ein Terminal sein, d.h. eine starre elektrische Verbindung.
Bei bekannten derartigen Vorrichtungen wird eine Ultraschallschwingung parallel zu einer Schweissfläche eingebracht, wobei gleichzeitig senkrecht dazu, beispielsweise über eine Kompaktier- oder Gegenfläche, eine Kompaktierkraft ausgeübt wird. Dabei ist typischerweise ein Verdichtungs- bzw. Schweissraum vorgesehen, in welchem das Schweissgut vor und während dem Schweissvorgang zusammengepresst d.h. kompaktiert wird. Insbesondere beim Verschweissen von Litzen ist es für eine haltbare Verschweissung erforderlich, die einzelnen Litzendrähte während des Verschweissens mit vergleichsweise grosser Kraft zusammenzupressen. Während des Schweissvorgangs hat die Ultraschallschwingung aufgrund der gegenseitigen Bewegung des kompaktierten Schweissguts zur Folge, dass sich die Teile verbinden d.h. eine Verschweissung erfolgt.
Bei einer Vielzahl von industriellen Anwendungen, insbesondere in der Automobilindustrie, besteht das Bedürfnis, bereits verbaute bzw. schwer zugängliche Teile mittels Ultraschallschweissen verbinden zu können. Beispielsweise können bei der Herstellung von Kabelbäumen für Fahrzeuge, welche an einem Brett vorkonfektioniert werden, die einzelnen Kabel zum Teil lediglich um etwa 4 cm angehoben werden. Dabei besteht insbesondere auch vermehrt das Bedürfnis, nicht nur Kupfer sondern auch stark oxidierende Materialien wie Aluminium mittels Ultraschallschweissen zu verbinden. Hierzu ist es erforderlich, dass eine möglichst hohe Leistung in den Schweissbereich eingebracht wird, um trotz der Oxidschicht eine haltbare Schweissverbindung zu schaffen.

Aus der DE 10 1707 026 707 B3 ist eine Vorrichtung zum elektrisch leitenden Verbinden von Aluminiumlitzen bekannt. Eine Sonotrode weist hierbei eine Schweissfläche auf, welche in direktem Kontakt mit den Aluminiumlitzen steht. Die in ihrer Längsrichtung schwingende Sonotrode beaufschlagt die Litzen in deren Längsrichtung mit einer Ultraschallschwingung, sodass die Litzen miteinander verschweisst werden. Die Litzen müssen hierzu in Längsrichtung der Sonotrode angeordnet werden, was einen grossen Platzbedarf zur Folge hat bzw. voraussetzt, dass die zu verschweissenden Teile eine entsprechende Anordnung überhaupt zulassen.

Die EP 0 143 936 B1 schlägt zum platzsparenden Verschweissen vor, einen Schweiss- bzw. Verdichtungsraum einer Vorrichtung senkrecht zur Sonotrodenlängsachse auszubilden, sodass auch die zu verschweissenden Teile senkrecht zur Sonotrodenachse angeordnet werden können. Dabei werden die Teile allerdings quer zum Verdichtungsraum und damit quer zu ihrer Längsrichtung mit der Ultraschallschwingung beaufschlagt, womit nur eine geringe effektive Leistung eingebracht wird. Ein Metallschweissen von z.B. Litzen, insbesondere aus Aluminium, ist somit kaum möglich.

Die WO 95/23668 A1 schlägt vor, einen Sonotrodenkopf zu überlagerten longitudinalen und torsionalen Schwingungen anzuregen, wobei die Schwingungsenergie umfangsseitig abgenommen wird. Damit wird ermöglicht, einen Verdichtungsraum senkrecht zur Sonotrodenachse anzuordnen und dennoch die zu verschweissenden Teile bis zu einem gewissen Grad in deren Längsrichtung mit der Ultraschallschwingung zu beaufschlagen. Allerdings hat sich herausgestellt, dass aufgrund der Ausbildung und Anregung der Sonotrode eine Gestaltung des Verdichtungsraums konstruktiv aufwändig ist und mit vergleichsweise grossen Toleranzen erfolgen muss. Ausserdem können sich beim Verschweissen von Litzen quer zur Litzenrichtung eingebrachte Ultraschallschwingungen nachteilig auf die Verschweissung auswirken, da diese die kompaktierte Anordnung der Litzendrähte stören (einzelne Drähte "rollen", anstatt zu reiben), wodurch auch die Schwingungen in Längsrichtungen an Wirksamkeit verlieren können. Ebenso ist eine Miniaturisierung der Sonotrode konstruktionsbedingt begrenzt, da die zur Erzeugung der Torsionsschwingung erforderlichen Schrägschlitze des Umwandlers gewisse Mindestausmasse nicht unterschreiten können. Nicht zuletzt ist die Ausbildung der Schlitze aufwendig und damit kostenintensiv.
Die Aufgabe der Erfindung ist es daher, die Nachteile des Bekannten zu vermeiden und insbesondere eine vielseitig anwendbare Vorrichtung zum Ultraschallschweissen bereit zu stellen, welche einfach in der Konstruktion ist und ein platzsparendes sowie effizientes und haltbares Verschweissen, insbesondere an einem Kabelbaum, ermöglicht. Die Vorrichtung soll dabei insbesondere auch ein Verschweissen von Litzen aus Kupfer sowie aus Aluminium ermöglichen. Weiter ist es die Aufgabe der Erfindung, ein mobiles Schweissgerät bereitzustellen.

Eine erfindungsgemässe Vorrichtung zum Verschweissen von Metallteilen mittels Ultraschall ist im Anspruch 1 definiert. Die Vorrichtung umfasst eine Sonotrode mit einem Sonotrodenkopf, welcher von einem Schwingungserzeuger in Torsionsschwingungen bezüglich einer Torsionsachse anregbar ist.

Dabei ist am Sonotrodenkopf bezüglich der Torsionsachse umfangsseitig eine Schweissfläche angeordnet. Weiter ist ein Amboss mit einer Kompaktierfläche vorhanden, welche gegenüber der Schweissfläche der Sonotrode bezüglich dieser feststehend anordenbar ist. Bei gegenüberliegender Anordnung begrenzen die Schweissfläche und die Kompaktierfläche einen für die Aufnahme von zu verschweissende Teilen vorgesehen Verdichtungsraum in einer Richtung senkrecht zur Torsionsachse. Die Erfindung zeichnet sich dadurch aus, dass die Sonotrode derart ausgebildet und mit dem Schwingungserzeuger gekoppelt ist, dass die gesamte Sonotrode zu einer Torsionsschwingung mit vernachlässigbar kleinem Längsschwingungsanteil anregbar ist. Mit anderen Worten heisst dies, dass der Schwingungserzeuger zur Erzeugung von Längsschwingungen ausgebildet und senkrecht zur Torsionsachse angeordnet ist, wobei der Schwingungserzeuger in einem radialen Abstand von der Torsionsachse, insbesondere tangential, an einem Torsionsschwinger angreift, an welchem die Sonotrode rotationsfest angebracht ist.
Indem erfindungsgemäss die gesamte Sonotrode in eine Torsionsschwingung versetzt wird, kann der Anteil einer in der Praxis kaum zu vermeidenden Längsschwingung auf einen vernachlässigbar geringen Anteil reduziert werden. Unter einem vernachlässigbar kleinen Längsschwingungsanteil wird hier und im Folgenden ein Längsschwingungsanteil verstanden, welcher eine longitudinale Amplitude aufweist, die weniger als 1 % der torsionalen Arbeitsamplitude beträgt, bevorzugt weniger als 0.5 %. Es hat sich sogar gezeigt, dass in der Praxis mit der erfindungsgemässen Vorrichtung Amplituden des Längsschwingungsanteils erreicht werden, welche nur etwa 0.2 % der Arbeitsamplitude betragen.
Zum einen wird damit erreicht, dass weitgehend die gesamte vom Schwingungserzeuger zugeführte Schwingungsenergie in der Torsionsschwingung der Sonotrode verfügbar ist, sodass auch bei senkrecht zur Torsionsachse angeordnetem Schweissgut ein optimaler Leistungsübertrag stattfindet.
Zum anderen beschreibt ein Arbeitsbereich der Sonotrode, im vorliegenden Fall der Sonotrodenkopf mit daran ausgebildeter Schweissfläche, eine wohldefinierte Rotations- bzw. Drehbewegung ohne nennenswerte Auslenkung in Längsrichtung. Angrenzende feststehende oder verschiebbare Teile der Vorrichtung können daher mit deutlich geringeren Toleranzen an den Sonotrodenkopf herangebaut bzw. geschoben werden, ohne dass allfällig auftretende Schwingungsamplituden in Längsrichtung berücksichtigt werden müssen. Insbesondere der einseitig von der Schweissfläche der Sonotrode begrenzte Verdichtungs- bzw. Schweissraum kann vergleichsweise exakt begrenzt werden, indem Begrenzungselemente auch in Richtung der Torsionsachse dicht am Sonotrodenkopf angeordnet sein können. Damit kann beispielsweise verhindert werden, dass besonderes feine Litzendrähte beim Kompaktieren im Verdichtungsraum in Spalten zwischen Begrenzungselementen des Verdichtungsraums eintreten können bzw. sich dort verfangen können. Der in der Fachliteratur auch als Konverter bezeichnete Schwingungserzeuger der erfindungsgemässen Vorrichtung ist zur Erzeugung von Längsschwingungen ausgebildet und senkrecht zur Torsionsachse der Sonotrode angeordnet. Derartige Schwingungserzeuger sind verbreitet, sodass kostengünstige Standardbauelemente angewendet werden können. Indem der Schwingungserzeuger senkrecht und seitlich versetzt zur Torsionsachse angeordnet ist, kann durch geeignete, direkte oder indirekte, Kopplung an die Sonotrode die Längsschwingung des Erzeugers in einer Torsionsschwingung der gesamten Sonotrode umgesetzt werden. Es ist auch denkbar, dass zwei oder mehrere Schwingungserzeuger mit der Sonotrode zur Erzeugung der Torsionsschwingung zusammenwirken, wobei diese dann je nach Anordnung bzw. Anzahl z.B. wechselseitig getaktet sind.

Zur Anregung der Torsionsschwingung der Sonotrode wirkt gemäß der Erfindung der Schwingungserzeuger über einen bezüglich der Torsionsschwingung mit der Sonotrode gekoppelten Torsionsschwinger mit der Sonotrode zusammen. Der Torsionsschwinger kann z.B. als koaxial zur Torsionsachse angeordneter Achskörper ausgebildet sein, an dessen einen Endbereich die Sonotrode rotationsfest befestigt ist.
Bevorzugt ist die Sonotrode zur Befestigung am Torsionsschwinger mit diesem verschraubt. Bei bekannten Verschraubungen von Sonotroden mit Torsionsschwingern ist sowohl an Sonotrode als auch am Torsionsschwinger an einer jeweiligen Befestigungsstirnseite ein Sackloch mit Innengewinde ausgebildet. Über eine beidseitige Madenschraube wird die Sonotrode mit dem Torsionsschwinger verschraubt. Bei einer derartigen Verschraubung ist es allerdings schwierig, die Sonotrode bezüglich einer Rotation um die Längsachse auszurichten, da bei der Befestigung eine Rotierbarkeit der Sonotrode erforderlich ist. Vorliegend weist die Sonotrode jedoch bevorzugt eine einseitige Verschraubung auf, bei welcher mit Vorteil eine Befestigungsschraube in Richtung der Torsionsachse, vom Sonotrodenkopf her an der Sonotrode abgestützt, in den Torsionsschwinger eingeschraubt ist. Bevorzugt weist die Sonotrode hierzu in Längsrichtung ein vom Sonotrodenkopf her zugängliches, zentrales Senkloch auf, welches zur Befestigungsstirnseite hin eine in Längsrichtung durchgängige Bohrung am Boden des Senklochs aufweist. Vom Sonotrodenkopf her kann somit durch die Bohrung eine Schraube in Längsrichtung in das Innengewinde am Torsionsschwinger eingeschraubt und die Sonotrode am Torsionsschwinger befestigt werden. Ein Schraubenkopf kann im Senkloch angeordnet und an einem Boden des Senklochs abgestützt sein. Auf diese Weise kann eine Ausrichtung der Sonotrode bezüglich einer Rotation auf einfache Weise vorgegeben und durch Anziehen der Schraube fixiert werden. Insbesondere braucht die Sonotrode beim Befestigungsvorgang gegenüber dem Torsionsschwinger nicht rotierbar zu sein.
Es versteht sich, dass die Verschraubung selbstverständlich auch umgekehrt erfolgen kann, d.h. das Senkloch ist von einem hinteren Längsende des Torsionsschwingers her zugänglich in dessen Längsrichtung ausgebildet und das Innengewinde in der Sonotrode. Die Verschraubung erfolgt in diesem Fall vom Torsionsschwinger her in das Innengewinde der Sonotrode, wobei der Schraubenkopf im Senkloch am Torsionsschwinger abgestützt ist. Ebenso versteht es sich, dass dieses Befestigungsprinzip (einseitige Verschraubung) der Sonotrode am Torsionsschwinger auch als eigenständiger Aspekt vorteilhaft ist und bei anderen Sonotroden zur Anwendung kommen kann.
Ein Bereich an einem dem Befestigungsbereich der Sonotrode gegenüberliegenden Längsende des als Achskörpers ausgebildeten Torsionsschwingers kann z.B. zum Angriff des Schwingungserzeugers vorgesehen sein. Zur schwingungsentkoppelten Lagerung an einem Gehäuse der Vorrichtung kann der Achskörper z.B. auf bekannte Weise in einem Schwingungsknoten des angeregten Schwingungsmodes am Gehäuse unterstützt sein.
Zur Anregung der Torsionsschwingung im Torsionsschwinger und der damit verbundenen Sonotrode greift gemäß der Erfindung ein Aktor des Schwingungserzeugers in einem radialen Abstand von der Torsionsachse am Torsionsschwinger an. Besonders einfach lässt sich ein Angriff in einem Bereich tangential am Querschnitt des Torsionsschwingers verwirklichen. Indem der Aktor in einem radialen Abstand von der Torsionsachse am Torsionsschwinger angreift erfährt dieser ein Drehmoment um die Torsionsachse. Damit kann auf einfach Weise die am Aktor abgreifbare Längsschwingung direkt in eine Torsionsschwingung des Torsionsschwingers umgesetzt werden. Indem der Schwingungserzeuger senkrecht zur Torsionsachse angeordnet ist, erfährt der Torsionssschwinger nur ein Drehmoment um die Torsionsachse ohne longitudinale Kraftkomponenten.

Bevorzugt fällt die Torsionsachse mit einer Längsachse der Sonotrode zusammen. Mit Vorteil ist dabei die Sonotrode bezüglich der Längsachse achsensymmetrisch ausgebildet, sodass sich bezüglich der Torsionsachse keine Unwuchten ergeben. Im Falle eines Torsionsschwingers ist dieser bevorzugt ebenfalls achssymmetrisch bezüglich seiner Längsachse ausgebildet, wobei die Längsachse mit der Torsionsachse zusammenfällt.

In einer bevorzugten Ausführungsform kragt der Sonotrodenkopf flanschartig an einem freien Ende der Sonotrode quer zur Torsionsachse aus. Der flanschartige Sonotrodenkopf weist in Längsrichtung mit Vorteil zwei quer zur Torsionsachse und planparallele ausgerichtete Oberflächen auf. Ein Abstand der Oberflächen in Richtung der Torsionsachse definiert dabei eine Dicke des Sonotrodenkopfs. Mit Vorteil erstreckt sich dabei die Schweissfläche über die gesamte Längsdimension, d.h. die Dicke des Sonotrodenkopfs. Damit wird zum einen erreicht, dass die Schweissfläche unabhängig von der übrigen Ausbildung der Sonotrode in einem weitgehend beliebigen radialen Abstand von der Torsionsachse angeordnet sein kann. Zum anderen kann die gesamte Dicke des Flansches zur Schwingungsübertragung an der Schweissfläche genutzt werden. Der Flansch kann daher vergleichsweise dünn ausgebildet sein.

In einer bevorzugten Ausführungsform umfasst der flanschartige Sonotrodenkopf zwei quer zur Torsionsachse symmetrisch ausgebildete Laschen, von welchen wenigstens eine umfangsseitig die Schweissfläche aufweist. Die schwingende Masse des Sonotrodenkopfs kann damit gegenüber einem vollständig kreisringförmigen Flansch weiter verringert werden. In einer Abwandlung können beide Laschen umfangsseitig eine Schweissfläche aufweisen, sodass bei Abnutzung der einen Schweissfläche die Sonotrode um 180 Grad bezüglich der Torsionsachse gedreht werden kann, um die andere Schweissfläche zur Benutzung am Verdichtungs- bzw. Schweissraum anzuordnen. Die Sonotrode kann hierfür ein Befestigungsmittel aufweisen, mit welchem sie abnehmbar und in verschiedenen Positionen am Torsionsschwinger befestigbar ist. Es versteht sich, dass auch bei anderen Ausbildungen des Sonotrodenkopfs mehrere Schweissflächen vorgesehen sein können, welche durch Befestigung der Sonotrode in verschiedenen Drehpositionen am Torsionsschwinger zur Benutzung am Verdichtungs- bzw. Schweissraum angeordnet werden können. Bevorzugt umfasst der Sonotrodenkopf in einer weiteren bevorzugten Ausführungsform daher allgemein wenigstens zwei oder mehrere, bevorzugt 4, umfangseitig ausgebildete Schweissflächen.

In Richtung der Torsionsachse ist der Verdichtungsraum vorzugsweise von einem äusseren und einem inneren Seitenschieber begrenzt. Die Seitenschieber definieren damit eine Länge des Verdichtungsraums in Längsrichtung, d.h. in Richtung der Torsionsachse.

Der Verdichtungsraum ist dabei in einer Richtung senkrecht zur Torsionsachse bevorzugt durchgehend und nach aussen offen ausgebildet. Damit kann das Schweissgut wie z.B. ein oder mehrere Kabel in einer Richtung quer zur Torsionsachse im Verdichtungsraum angeordnet werden.
Mit Vorteil ist, insbesondere im Falle feststehender Seitenschieber, der Verdichtungsraum zu beiden Seiten der Schweissfläche der Sonotrode von den Seitenschiebern begrenzt und der Sonotrodenkopf ist zumindest teilweise in einem Zwischenraum zwischen den Seitenschiebern angeordnet. Dabei entspricht bevorzugt ein Abstand der Seitenschieber in Richtung der Torsionsachse einer Dimension des Sonotrodenkopfs in dieser Richtung. Die genannte Dimensionsentsprechung versteht sich im Rahmen einer Toleranz, welche eine freie Torsionsschwingung des Sonotrodenkopfs sicherstellt.

Eine derartige Anordnung wird erst durch die erfindungsgemässe angeregte Torsionsschwingung mit vernachlässigbarem Längsschwingungsanteil des Sonotrodenkopfs ermöglicht. Anderenfalls wären die Seitenschieber aufgrund der Längsschwingungsamplitude vom Sonotrodenkopf zu beabstanden bzw. müssten entsprechende Ausnehmungen vorhanden sein, womit sich gegebenenfalls unerwünschte Freiräume zwischen Sonotrodenkopf und Seitenschieber ergeben könnten.

Bevorzugt ist dabei der äussere Seitenschieber in Richtung der Torsionsachse dem Sonotrodenkopf vorgelagert und überdeckt vorzugsweise eine Stirnseite der Sonotrode vollständig. Indem der äussere Seitenschieber den Sonotrodenkopf vollständig überdeckt, ist dieser nach aussen vor mechanischen Einwirkungen geschützt. Der äussere Seitenschieber kann dabei vergleichsweise dünn ausgebildet sein, sodass der Verdichtungsraum in axialer Richtung nahe an das Schweissgut herangebracht werden kann.

Insbesondere bei einer Ausführungsform mit in Längsrichtung fest angeordneten Seitenschiebern sind mit Vorteil der innere und der äussere Seitenschieber bezüglich der Sonotrode in einer Richtung senkrecht zur Torsionsachse gemeinsam verschiebbar angeordnet. Hierzu ist beispielsweise eine quer zur Torsionsachse ausgerichtete Längsführung ausgebildet, an welchen die Seitenschieber geführt verschiebbar sind. Der Sonotrodenkopf kann somit durch die Verschiebung der Seitenschieber weiter oder weniger weit in dem Zwischenraum zwischen den Seitenschiebern angeordnet sein.

Der innere und der äussere Seitenschieber sind dabei mit Vorteil gemeinsam an einem in senkrechter Richtung zur Torsionsachse gegenüber der Sonotrode verschiebbar geführten Wagen gelagert, sodass bei einer Verschiebung des Wagens der Sonotrodenkopf in den Zwischenraum zwischen den Seitenschiebern ein- oder ausbringbar ist. Es versteht sich, dass auch nur einer der Seitenschieber am Wagen gelagert sein kann, während der andere in einer Richtung senkrecht zur Torsionsachse fest angeordnet ist.

In einer gegebenenfalls zu bevorzugenden Ausführungsform kann wenigstens einer der Seitenschieber derart ausgebildet sein, dass er in Richtung der Torsionsachse verschiebbar ist. Hierzu weist der Seitenschieber bevorzugt eine Ausnehmung auf, welche im Wesentlichen, d.h. im Rahmen einer für die Schwingung der Sonotrode erforderlichen Toleranz, einen Bereich einer Projektion des Sonotrodenkopfs in Richtung der Torsionsachse, insbesondere im Bereich der Schweissfläche, freilässt. Auf diese Weise ist der wenigstens eine Seitenschieber in einen Längenbereich des Sonotrodenkopfs bzw. dessen Schweissfläche verschiebbar, wobei eine dem Verdichtungsraum zugewandte Innenfläche des Seitenschiebers mit möglichst geringem Spalt an die Schweissfläche anschliesst. Der Seitenschieber ist somit in Torsionsachsenrichtung zum anderen Seitenschieber hin verschiebbar und erlaubt somit eine Verringerung der Dimension des Verdichtungsraums in Richtung der Torsionsachse. Insbesondere kann in diesem Fall die Dimension des Verdichtungsraums in dieser Richtung unabhängig von der Längsdimension des Sonotrodenkopfs verringert werden.

Bevorzugt ist der äussere Seitenschieber in Längsrichtung verschiebbar während der innere Seitenschieber an einer in Längsrichtung festen Position angeordnet ist. Der in Längsrichtung verschiebbare Seitenschieber braucht dabei nicht in radialer Richtung bezüglich der Torsionsachse verschiebbar zu sein. In diesem Fall kann der Amboss beispielsweise mit einer Stirnseite in Längsrichtung an die dem Verdichtungsraum zugewandte Innenfläche des wenigstens einen Seitenschiebers stossen, um den Verdichtungsraum in radialer Richtung nach aussen vollständig abzuschliessen. Bei einer Verschiebung in Richtung der Torsionsachse des wenigstens einen Seitenschiebers kann der Amboss entsprechend mit verschoben werden.

Grundsätzlich ist es auch denkbar, nur den inneren Seitenschieber oder beide Seitenschieber in Richtung der Torsionsachse verschiebbar auszugestalten. Allerdings sind diese Varianten meist aufwendiger.

Mit Vorteil ist der wenigstens eine Seitenschieber direkt oder indirekt an einer vorrichtungsfesten Verschiebeführung in Richtung der Torsionsachse verschiebbar gelagert, wobei zur Verschiebung bevorzugt ein elektrischer Antrieb, insbesondere mit einem Spindeltrieb, vorhanden ist. Der Antrieb kann beispielsweise über einen Spindeltrieb auf einen an der vorrichtungsfesten Verschiebeführung geführten Verschiebekörper wirken, mit welchem der Seitenschieber direkt oder indirekt starr verbunden ist. Es versteht sich, dass die Verschiebung auch pneumatisch, hydraulisch oder über andere Antriebe erfolgen kann.

Mit Vorteil ist der Amboss derart am Wagen oder an einem der Seitenschieber gelagert, insbesondere am inneren Seitenschieber, dass der Amboss zusammen mit diesem Seitenschiebern quer zur Torsionsachse verschiebbar ist, wobei der Amboss derart angeordnet ist, dass er bei einer Verschiebung des Wagens oder des Seitenschiebers in einer Richtung zur Sonotrode hin verschiebbar ist.

Bevorzugt ist der Amboss dabei zudem in Richtung parallel zur Torsionsachse verschiebbar angeordnet, sodass der Amboss in eine ausgefahrene Position bringbar ist, in welcher er über den Seitenschieber übersteht und die Gegen- bzw. Kompaktierfläche des Ambosses der Schweissfläche der Sonotrode gegenüberliegt. Der Amboss ist zudem mit Vorteil auch in eine eingefahrene Position verschiebbar, in welcher er in Längsrichtung mit dem Seitenschieber abschliesst, sodass der Verdichtungsraum zum Einbringen von Schweissgut zugänglich ist.

Vorzugsweise schliesst der Amboss in der ausgefahrenen Position den Verdichtungsraum in einer Richtung senkrecht zur Torsionsachse nach aussen vollständig ab. Mit anderen Worten überbrückt der Amboss in der ausgefahrenen Position den Abstand zwischen den Seitenschiebern, d.h. eine Länge des Verdichtungsraums, vollständig.

Der Amboss bildet somit zusammen mit den Seitenschiebern bezüglich der Verschiebung quer zur Torsionsachse eine backenartige Einheit. Insbesondere kann somit bei ausgefahrenem Amboss durch das Absenken des Ambosses das Volumen des Verdichtungsraums zum Verdichten des Schweissguts in radialer Richtung gleichmässig verringert werden. Bei zusätzlich in Richtung der Torsionsachse verschiebbarem Seitenschieber, kann eine Dimension des Verdichtungsraums auch in dieser Richtung verringert werden, um eine möglichst gleichmässige Reduktion des Volumens des Verdichtungsraums zu erreichen.

Es versteht sich, dass auch andere Varianten denkbar sind, bei welchen der Amboss beispielsweise schwenkbar gelagert ist oder die Seitenschieber gegenüber der Sonotrode feststehen und der Amboss im Zwischenraum zwischen den Seitenschiebern zur Schweissfläche hin verschiebbar ist. Diese Varianten können allerdings den Nachteil haben, dass sie konstruktiv vergleichsweise aufwändig und/oder in der Praxis umständlich in der Handhabung sind.

Die erfindungsgemässe Vorrichtung, insbesondere sämtliche oben beschriebenen Ausführungsformen, kommt aufgrund des platzsparend zugänglichen Schweissraums mit Vorteil in mobilen Schweissgeräten zur Anwendung. Die Erfindung umfasst daher auch ein mobiles Schweissgerät, welches eine erfindungsgemässe Vorrichtung aufweist.

Derartige Geräte sind bevorzugt über eine Versorgungsleitung an eine separate Versorgungseinheit angeschlossen, welche vorzugsweise einen Generator zur Versorgung des Schweissgeräts mit elektrischem Strom oder einen Luftdruckgenerator zur Versorgung mit Pressluft umfasst. Die Versorgungseinheit umfasst mit Vorteil auch einen Steuerungscomputer, wobei z.B. ein Bedienungspanel, auch mit einem Bildschirm, am mobilen Schweissgerät ausgebildet ist. Der Benutzer kann in diesem Fall direkt am mobilen Schweissgerät die Versorgungseinheit bedienen. Die Versorgungsleitung fasst bevorzugt sämtliche erforderlichen Verbindungen zwischen der Versorgungseinheit und dem mobilen Schweissgerät in einer Leitung zusammen.

Derartige mobile Schweissgeräte sind besonders für den Einsatz bei Schweissgut geeignet, welches z.B. bereits verbaut bzw. auf andere Weise fixiert ist und nicht mehr einem stationären Schweissgerät zugeführt werden kann. Gerade in diesem Bereich erweist sich die erfindungsgemäss bereitgestellte Vorrichtung zum platzsparenden, effizienten und haltbaren Schweissen mit Ultraschall als besonders vorteilhaft.

In der Regel ist die Versorgungseinheit dabei stationär ausgebildet, während das mobile Schweissgerät weitgehend frei bewegt werden kann. Es ist allerdings auch denkbar die Versorgungseinheit auf einen fahrbaren Untersatz vorzusehen, sodass sie näher an den Arbeitsbereich herangebracht werden kann, in welchem dann mit dem mobilen Schweissgerät Schweissungen an verschiedenen Stellen vorgenommen werden können.

Als mobile Schweissgeräte werden z.B. Schweisszangen oder andere Ausführungen verstanden, welche von Benutzern getragen und an das Schweissgut herangeführt werden können. Denkbar sind auch Ausführungen, welche beispielsweise an einer gewichtskompensierenden Aufhängung gehalten sind und vom Benutzer nur geführt werden. Weiter können auch eine Befestigungsvorrichtung oder ein Stativ am mobilen Schweissgerät vorhanden sein, mit welcher es während des Schweissens in einem Arbeitsbereich temporär befestigt bzw. aufgestellt werden kann.

Typischerweise umfassen mobile Schweissgeräte zur Handhabung durch einen Benutzer aussenseitig am Gehäuse ausgebildete Handgriffe. Gemäss der Erfindung ist der Verdichtungs-/Schweissraum stirnseitig quer zur eine Längsrichtung der Vorrichtung bzw. der Sonotrode angeordnet. Bei einem erfindungsgemässen mobilen Schweissgerät ist daher bevorzugt in einem vorderen Bereich ein Handgriff quer zur Vorrichtungslängsachse an einer Oberseite des Gerät angeordnet. Dies ermöglicht eine sichere Handhabung, wenn das Gerät weitgehend in dessen Längsrichtung mit der vorderen Stirnseite an das Schweissgut heran bewegt wird. Es versteht sich, dass, je nach Lage des Schweissguts, das Gerät auch in anderen Richtungen an das Schweissgut heranbewegt werden kann.

Zusätzlich ist dabei mit Vorteil ein weiterer Handgriff in einem Bereich an einem hinteren Längsende des Geräts vorgesehen. Wird der senkrecht zur Torsions-/Längsachse angeordnete Konverter nach unten ausgerichtet, kann eine Gehäuseummantelung des Konverters mit Vorteil als pistolengriffartiger Haltegriff ausgebildet sein und so einen hinteren Haltegriff bilden.

Aus der nachfolgenden Detailbeschreibung und der Gesamtheit der Patentansprüche ergeben sich weitere vorteilhafte Ausführungsformen und Merkmalskombinationen der Erfindung.

Die zur Erläuterung des Ausführungsbeispiels verwendeten Zeichnungen zeigen schematisch:
- Fig. 1: eine erfindungsgemässe Vorrichtung in einer perspektivischen Schrägansicht;
- Fig. 2: eine Frontalansicht auf einen Arbeitsbereich der Vorrichtung längs einer Längsachse;
- Fig. 3a: eine Seitenansicht der Vorrichtung in einer Bereitschaftsstellung;
- Fig. 3b: eine Seitenansicht der Vorrichtung in einer Kompaktier/Schweissstellung;
- Fig. 4: Sonotrode und Konverter in einer Anordnung gemäss der erfindungsgemässen Vorrichtung;
- Fig. 5: eine weitere Ausführungsform einer erfindungsgemässen Vorrichtung in einer perspektivischen Schrägansicht;
- Fig. 6: eine teilweise Aussenansicht eines Sonotrodenkopfs mit äusserem Seitenschieber der Vorrichtung der Fig. 5;
- Fig. 7: eine teilweise Seitenansicht der Vorrichtung gemäss Fig. 5;
- Fig. 8a: eine Prinzipskizze des Verdichtungsraums der Vorrichtung gemäss Fig. 1;
- Fig. 8b: eine Prinzipskizze des Verdichtungsraums der Vorrichtung gemäss Fig. 5;
- Fig. 9: eine teilweise Schnittansicht einer Sonotrodenbefestigung am Torsionsschwinger.

Grundsätzlich sind in den Figuren gleiche Teile mit gleichen Bezugszeichen versehen.

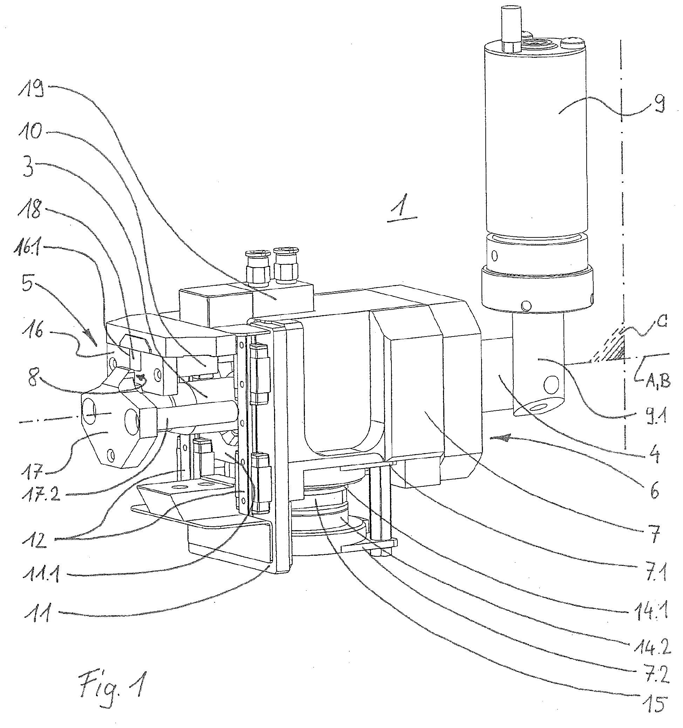

Figur 1 zeigt eine erfindungsgemässe Vorrichtung 1 in einer perspektivischen Schrägansicht.
Die Vorrichtung 1 weist an einem vorderen Längsende 5 einen Arbeitsbereich auf, an welchem ein Verdichtungs- bzw. Schweissraum 8 ausgebildet ist. In einem Endbereich an einem hinteren Längsende 6 der Vorrichtung 1 ist ein Schwingungserzeuger bzw. Konverter 9 angeordnet, dessen Aktor 9.1 mit einem Torsionsschwinger 4 der Vorrichtung 1 verbunden ist. Der Konverter 9 ist gemäß der Erfindung senkrecht zur Torsionsachse B ausgerichtet.

Hier und im Folgenden wird eine Richtung, in welche sich der Konverter 9 erstreckt mit "oben" bezeichnet und entsprechend eine Gegenrichtung mit "unten". Es versteht sich, dass diese Zuordnung exemplarisch gemäss der hier beschriebenen Ausführungsform gewählt ist. Es sind selbstverständlich auch andere Ausführungsformen denkbar, bei welchen der Konverter 9 z.B. "nach unten" oder "zur Seite" ausgerichtet sein kann. Eine Ebene C bezeichnet somit im Folgenden eine Hochebene, welche die Längsachse A bzw. die Torsionsachse B umfasst und welche in Richtung oben-unten ausgerichtet ist. Bezüglich dieser Ebene C ist der Konverter 9 parallel und seitlich versetzt angeordnet.

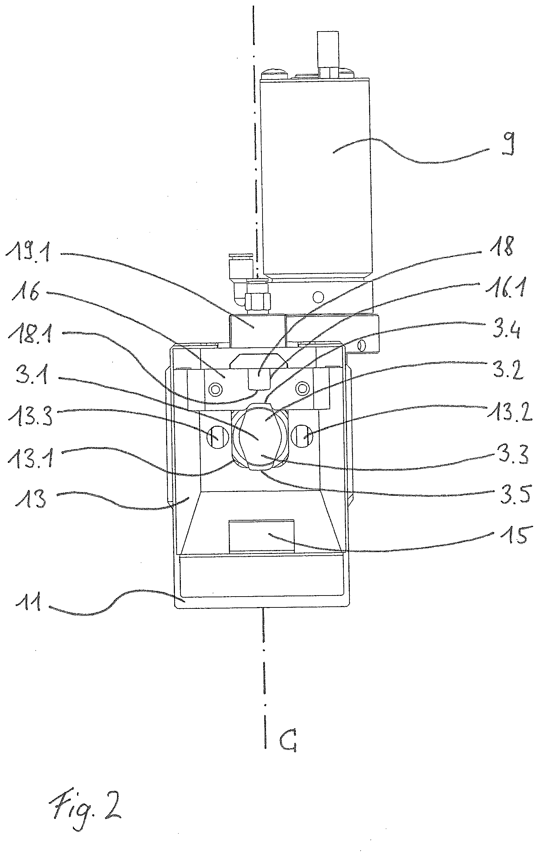

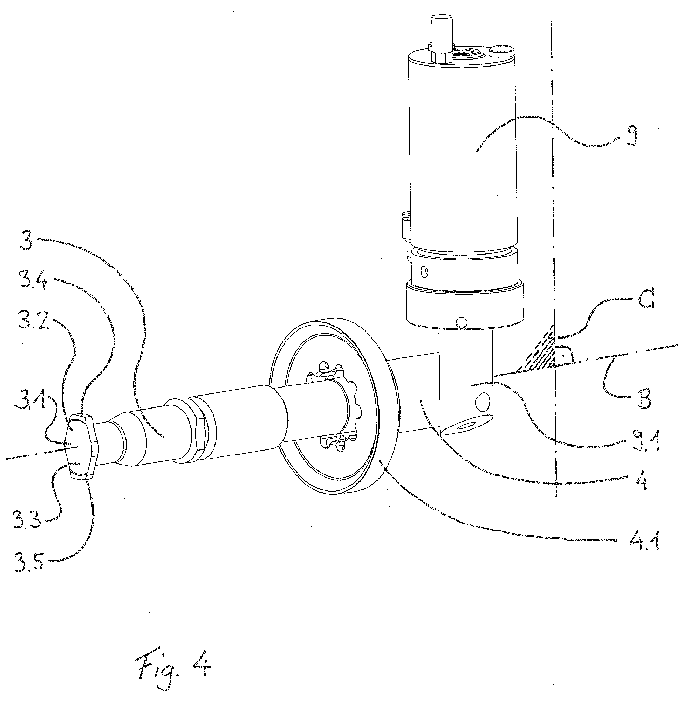

Der Torsionsschwinger 4 ist als länglicher Achskörper ausgebildet, dessen Längsachse mit einer Torsionsachse B zusammenfällt und der Längsachse A der Vorrichtung 1 entspricht (siehe auch Fig. 4). Der Torsionsschwinger 4 ist in einem Träger 7 der Vorrichtung 1 angeordnet und an diesem gelagert (siehe Fig. 2, Spannring 4.1). Ein hinteres, dem Arbeitsbereich abgewandtes, Längsende des Torsionsschwingers 4 ragt in Längsrichtung A über den Träger 7 hinaus. In einem Endbereich am hinteren Längsende des Torsionsschwingers greift, der Aktor 9.1 des Konverters 9 tangential am Torsionsschwinger 4 an.

An einem vorderen, dem Arbeitsbereich zugewandten, Längsende des Trägers 7 ist eine senkrecht zur Längsachse A angeordnete Trägerplatte 11 vorgesehen, an deren Vorderseite eine senkrecht zur Längsachse A bzw. Torsionsachse B und in Richtung oben-unten angeordnete Längsführung 12 mit zwei bezüglich der Ebene C symmetrisch und parallelen Schienen angeordnet ist. Zwischen den Schienen ist eine Durchtritt 11.1 in der Trägerplatte 11 ausgebildet, durch welchen, stirnseitig am Torsionsschwinger 4 befestigt, eine Sonotrode 3 nach vorne in den Arbeitsbereich hindurchragt.

An den Schienen 12 ist eine Wagen 13 in Richtung senkrecht zur Torsionsachse B verschiebbar geführt gelagert (in Fig. 1 nicht dargestellt, siehe z.B. Fig. 2). An einer Unterseite des Trägers 7 sind zwei linear wirkende Aktoren 14.1 und 14.2 senkrecht zur Längsachse A angeordnet und über Trägerelemente 7.1 und 7.2 am Träger 7 abgestützt. Die Aktoren 14.1 und 14.2 können jeweils in ihrer Längsrichtung expandieren (z.B. durch Beaufschlagung mit Pressluft) und können somit jeweils eine Kraft in Richtung senkrecht zur Längsachse A ausüben. Zwischen den Aktoren 14.1 und 14.2 ist ein Mitnehmerelement 15 angeordnet, welches durch die Ausnehmung 11.1 in der Trägerplatte 11 nach vorne ragt und koppelnd in den Wagen 13 eingreift. Wird der obere, näher beim Träger 7 angeordnete Aktor 14.1 betätigt, ergibt sich somit eine Kraft auf das Mitnehmerelement 15 nach unten, womit auch der Wagen 13 nach unten verschoben wird. Umgekehrt ergibt sich über das Mitnehmerelement 15 eine Kraft auf den Wagen 13 nach oben, wenn der untere Aktor 14.2 betätigt wird.

Der Wagen 13 weist dabei eine Ausnehmung 13.1 auf, durch welche die Sonotrode 3 in jeder Verschiebestellung des Wagens 13 ungestört hindurch treten kann (siehe Fig. 2). In Längsrichtung vor dem Wagen 13 ist ein Kopf 3.1 der Sonotrode 3 angeordnet. Am Wagen 13 ist oberhalb der Sonotrode 3 ein innerer Seitenschieber 16 angeordnet, welcher direkt oberhalb des Sonotrodenkopfs 13.1 einen Durchtritt 16.1 in Längsrichtung A aufweist. Im Durchtritt 16.1 ist ein Amboss 18 angeordnet, welcher in einer Längsführung 10 geführt über einen in Längsrichtung A wirkenden Aktuator 19 durch den Durchtritt 16.1 ausfahrbar und einfahrbar ist. An einer dem Sonotrodenkopf 3.1 zugewandten Seite weist der Amboss 18 eine Gegenfläche bzw. Kompaktierfläche 18.1 auf. Sowohl Aktuator 19 als auch die Längsführung 10 sowie der Amboss 18 sind dabei am Wagen 13 gelagert und werden bei einer Verschiebung des Wagens 13 mit verschoben.

Ebenfalls am Wagen 13 gelagert ist ein äusserer Seitenschieber 17, welcher über zwei zum Träger 7 hin ragende Tragebolzen 17.1 und 17.2 am Wagen 13 befestigt ist. Der äussere Seitenschieber 17 ist dabei dem Sonotrodenkopf 3.1 in Längsrichtung A vorgelagert und ist vom inneren Seitenschieber 16 in Längsrichtung 1 beabstandet. Der äussere Seitenschieber 17 überdeckt den Sonotrodenkopf 3.1 stirnseitig vollständig.

Der Sonotrodenkopf 3.1 weist zwei flanschartig auskragende Flügel 3.2 und 3.3 auf, welche sich nach oben (3.2) und nach unten (3.3) erstrecken. Der nach oben ragende Flügel 3.2 ist dabei zwischen dem äusseren Seitenschieber 17 und dem inneren Seitenschieber 16 angeordnet, wobei umfangsseitig an einer Oberseite des Flügels 3.2 eine Schweissfläche 3.4 ausgebildet ist. Bei der Schweissfläche.3.4 angeordnete Bereiche der einander zugewandten Innenflächen der Seitenschieber 16 und 17 sowie die Schweissfläche 3.4 des Sonotrodenkopfs 3.1 begrenzen dabei drei Seiten des Verdichtungsraums 8. Der Amboss 18 ist derart am inneren Seitenschieber 16 verschiebbar angeordnet, dass er in ausgefahrenem Zustand an den äusseren Seitenschieber 17 angrenzt, wobei die Kompaktierfläche 18.1 der Schweissfläche 3.4 der Sonotrode 3 gegenüberliegt. Bei ausgefahrenem Amboss 18 ist somit der Verdichtungsraum 8 in der Ebene C ringförmig umschlossen. In Richtung senkrecht zur Ebene C ist der Verdichtungsraum 8 zu beiden Seiten offen, sodass Schweissgut in Querrichtung durch den Verdichtungsraum 8 hindurch treten kann.

Figur 2 zeigt eine Frontalansicht auf den Arbeitsbereich 5 der Vorrichtung 1 längs der Längsachse A. Zur besseren Übersicht wurde auf die Darstellung des äusseren Seitenschiebers 17 verzichtet, um den Blick auf den Sonotrodenkopf 13.1 freizugeben.

Der Sonotrodenkopf 13.1 ist in der Draufsicht weitgehend rautenförmig ausgebildet, wodurch sich der nach oben und der nach unten ragende Flügel 3.2 bzw. 3.3 ergeben. Der Sonotrodenkopf 3.1 ist bezüglich der Torsionsachse B symmetrisch ausgebildet, sodass allfällige Unwuchten bezüglich einer Torsionsschwingung vermieden werden.

Ein oberes Ende des Sonotrodenkopfs 3.1, d.h. der nach oben ragende Flügel 3.2, ist abgeflacht (gekappte Rautenform) und zur, bezüglich der Torsionsachse B umfangsseitig angeordneten, Schweissfläche 3.4 ausgebildet. Der nach unten ragende Flügel 3.3 ist entsprechend abgeflacht, wobei je nach Ausführungsform der Vorrichtung 1 eine zweite, (Ersatz-) Schweissfläche 3.5 ausgebildet sein kann. Diese ist in der dargestellten Anordnung nicht in einer funktionellen Stellung, kann aber beispielsweise bei drehbar am Torsionsschwinger 4 angebrachter Sonotrode 3 in die Position der Schweissfläche 3.4 gedreht werden. Dies kann insbesondere dann sinnvoll sein, wenn sich die Schweissflächen rasch abnützten und ausgewechselt werden müssen.

Oberhalb der Schweissfläche 3.4 ist der innere Seitenschieber 16 als querbalkenförmiges Element ausgebildet, welches in weitgehend senkrechter Richtung zur Ebene C angeordnet ist. Der Seitenschieber 16 ist dabei in einer entsprechend am Wagen 13 ausgebildeten Nut befestigt. Durch den Durchtritt 16.1 am Seitenschieber 16 ist der in der Längsführung 10 angeordnete Amboss 18 erkennbar. An einer der Schweissfläche 3.4 zugewandten Unterseite des Ambosses 18 ist die Gegen- bzw. Kompaktierfläche 18.1 ausgebildet.

Auf der Höhe der Torsionsachse B bzw. der Längsachse A der Vorrichtung 1 sind zwei weitere Ausnehmungen 13.2 und 13.3 am Wagen 13 ausgebildet, welche zur Aufnahme und Halterung der Tragbolzen 17.1 und 17.2 des äusseren Seitenschiebers 17 vorgesehen sind.

Aus Fig. 2 ist weiter die seitliche bezüglich der Ebene C versetzte Anordnung des Konverters 9 ersichtlich, welche den tangentialen Angriff des Aktors 9.1 am Torsionsschwinger 4 zur Anregung der Torsionsschwingung ermöglicht.

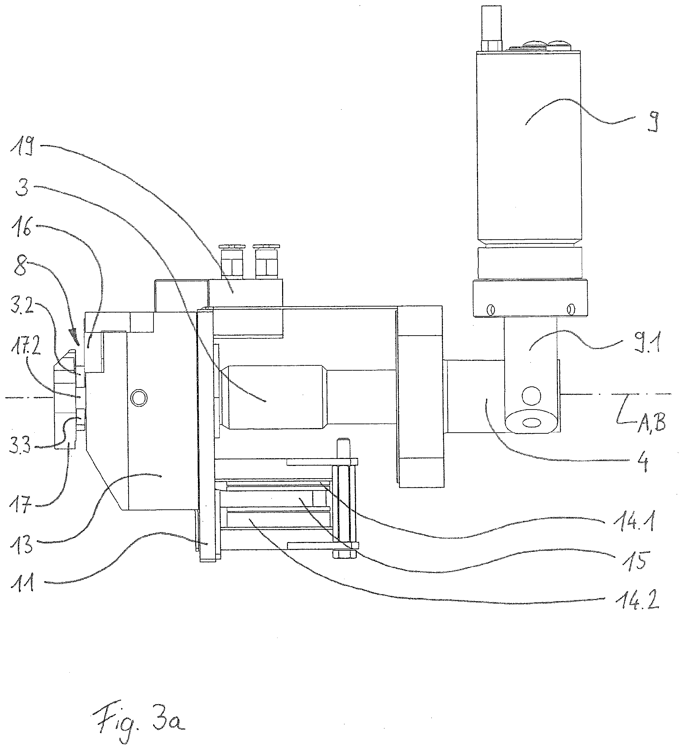

Figur 3a zeigt eine Seitenansicht der Vorrichtung 1, wobei zur besseren Übersichtlichkeit auf eine Darstellung des Trägers 7 verzichtet wurde.

Die Darstellung der Fig. 3a zeigt die Vorrichtung 1 in einem Bereitschaftszustand. Der untere Aktuator 14.2 ist expandiert und der obere Aktuator 14.1 ist kollabiert, sodass das dazwischen angeordnete Mitnehmerelement 15 nach oben verschoben ist. Durch die Kopplung an den Wagen 13 ist dieser vom Mitnehmerelement 15 mitgenommen und ebenfalls nach oben verschoben.

Der Amboss 18 ist vollständig in den Durchtritt 16.1 eingefahren, sodass eine Stirnfläche des Ambosses 18 mit der dem äusseren Seitenschieber 17 zugewandten Innenfläche des inneren Seitenschiebers 16 abschliesst. Der Verdichtungsraum 8 ist somit nach oben offen, womit Schweissgut wie beispielsweise Litzen oder andere Kabel in den Verdichtungsraum 8 eingebracht und auf der Schweissfläche 3.4 der Sonotrode 3 angeordnet werden können.

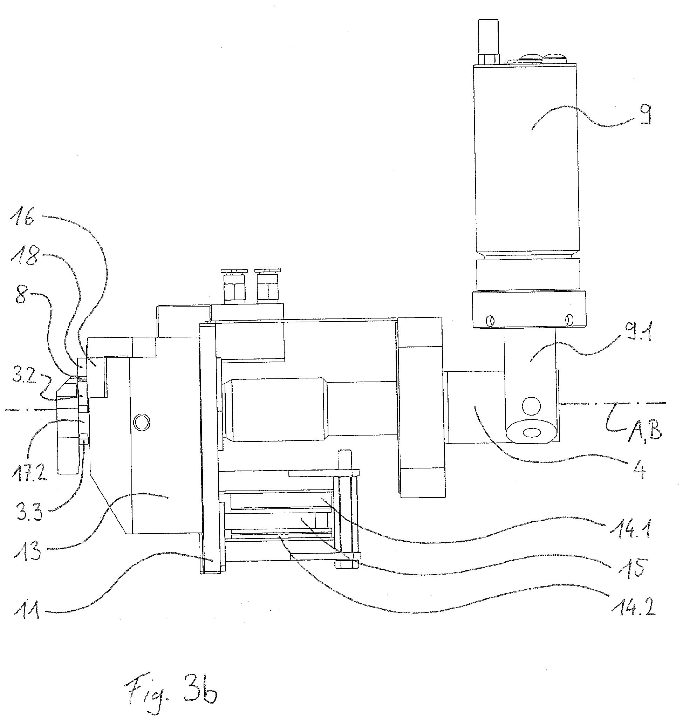

Figur 3b entspricht der Darstellung der Fig. 3a, wobei die Vorrichtung 1 in einer Kompaktier-/Schweissstellung ist.

Der Amboss 18 ist in Längsrichtung A nach vorne aus dem Durchtritt ausgefahren, sodass seine Stirnseite an eine dem inneren Seitenschieber 16 zugewandten Innenfläche des äusseren Seitenschiebers 17 stösst. Die Kompaktierfläche 18.1 des Ambosses 18 ist der Schweissfläche des Sonotrodenkopfs 3.4 gegenüberliegend angeordnet. Der Verdichtungsraum 8 ist damit nach oben durch den Amboss 18 vollständig abgeschlossen.

In der Schweissstellung ist zudem der Wagen 13 nach unten verfahren. Dies wird erreicht indem der obere Aktuator 14.1 expandiert und der untere Aktuator 14.2 kollabiert ist. Das Mitnehmerelement 15 wird damit nach unten, vom Träger 7 weg, bewegt und nimmt den Wagen 13 mit, welcher in der Längsführung 12 nach unten verschoben wird.

Zusammen mit dem Wagen 13 sind auch die daran angebrachten Seitenschieber 16 und 17 sowie der Amboss 18 (sowie Aktuator 19 und Längsführung 10) bezüglich des Trägers 7 nach unten abgesenkt. Die am Träger 7 gelagerte Sonotrode 3 sowie der Torsionsschwinger 4 bleiben dabei bezüglich des Trägers 7 ortsfest. Somit ergibt sich eine relativ Verschiebung des Wagens 13 mit daran angebrachten Komponenten gegenüber der Sonotrode 3.

Seitenschieber 16 und 17 sowie Amboss 18 bilden dabei einen U-förmigen Kompaktierungs-Backen, welcher den Sonotrodenkopf 3.1 zumindest teilweise umfasst und beim Übergang in die Schweissstellung gegen diesen verschoben wird. Der Sonotrodenkopf 3.1 bzw. der Flügel 3.2 des Sonotrodenkopfs 3.1 tritt dabei in den von der U-Form umschlossenen Innenraum ein. Der Innenraum der U-Form sowie der Flügel 3.2 des Sonotrodenkopfs 3.1 sind dabei derart bemessen, dass der Flügel 3.2. den Innenraum in Längsrichtung A praktisch vollständig ausfüllt. Es versteht sich, dass dabei eine Toleranz vorgesehen ist, welche eine freie Torsionsschwingung des Sonotrodenkopfs 3.1 erlaubt.

Beim Übergang in die Schweissstellung wird insbesondere auch die Kompaktierfläche 18.1 des Ambosses 18 zur Schweissfläche 3.4 hin verschoben. Das im Verdichtungsraum 8 vorhandene Schweissgut (nicht dargestellt) wird zwischen Kompaktierfläche 18.1 und Schweissfläche 3.4 verdichtet und dabei je nach der vom Aktuator 14.2 ausgeübten Kraft gegen die Schweissfläche 3.4 gepresst. Die Torsionsschwingung der Sonotrode 3 kann in der Folge über die Schweissfläche 3.4 des Sonotrodenkopfs 3.1 in das Schweissgut eingebracht werden. Das Schweissgut wird bevorzugt bereits vor der Anregung der Torsionsschwingung in der Sonotrode 3 mit einer ersten Kraft kompaktiert. Bei Auslösen des Schweissvorgangs, d.h. bei angeregter Torsionsschwingung der Sonotrode, kann das Schweissgut in der Folge weiter mit der ersten Kraft beaufschlagt bleiben oder mit einer zweiten z.B. grösseren Kraft beaufschlagt werden.

Zur Entnahme des Schweissguts wird die Vorrichtung 1 wieder in den Bereitschaftszustand gebracht, d.h. der Wagen 13 wird wieder nach oben verfahren und der Amboss 18 eingefahren, womit der Verdichtungsraum nach oben wieder offen.

Figur 4 zeigt eine Anordnung der Sonotrode 3, des Torsionsschwingers 4 sowie des Konverters 9 in der Anordnung gemäss der erfindungsgemässen Vorrichtung.

Eine vordere Stirnseite der Sonotrode 3 wird vom Sonotrodenkopf 3.1 abgeschlossen. Längs der Torsionsachse B bzw. Längsachse der Sonotrode 3 erstreckt sich die Sonotrode nach hinten zu einem Bereich 3.6, in welchem sie mit dem Torsionsschwinger 4 verbunden ist. Der Torsionsschwinger 4 ist dabei als länglicher Achskörper ausgebildet, dessen Längsachse mit der Längsachse der Sonotrode 3 sowie der Torsionsachse B zusammenfällt.

Der Torsionsschwinger 4 ist an einer Längsposition hinter der Sonotrode 3 von dem Spannring 4.1 umgeben, welcher ein Lager für den Torsionsschwinger bildet, an welchem der Torsionsschwinger am Träger 7 abgestützt ist. Typischerweise ist der Spannring 4.1 dabei in einem Schwingungsknoten des angeregten Torsionsschwingungsmodes angeordnet, um eine Schwingungsübertragung auf den Träger 7 und damit auch auf andere Komponenten der Vorrichtung 1 zu vermeiden.

Hinter dem Spannring 4.1, d.h. auf einer bezüglich dem Spannring 4.1 der Sonotrode 3 gegenüberliegenden Längsposition des Torsionsschwingers 4, greift der Aktuator 9.1 des seitlich versetzt angeordneten Konverters 9 tangential zu einem Umfang des Torsionsschwingers 4 und senkrecht zur Längsachse bzw. zur Torsionsachse B am Torsionsschwinger 4 an.

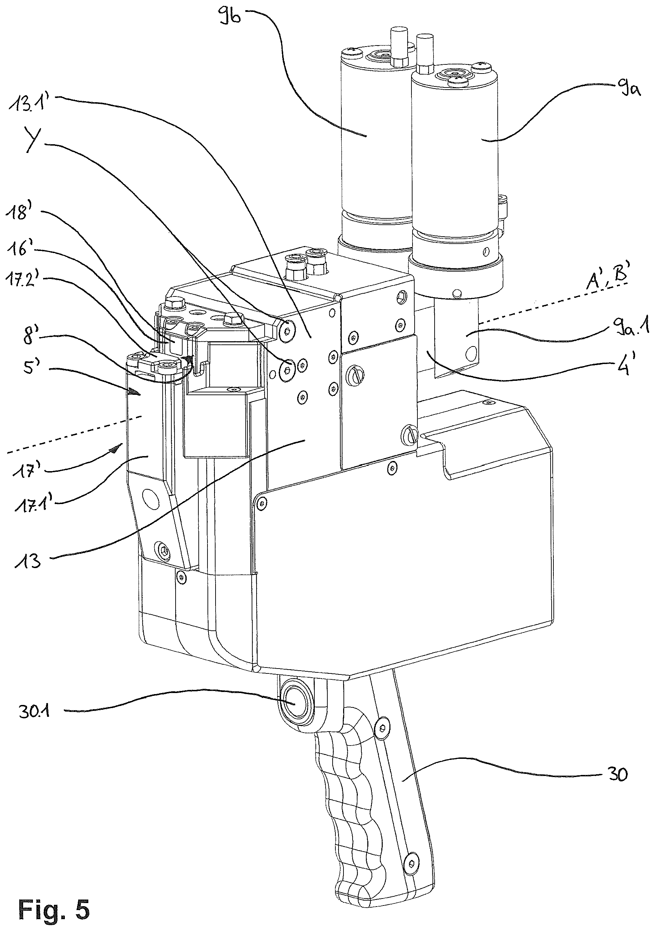

Figur 5 zeigt eine weitere Ausführungsform einer erfindungsgemässen Vorrichtung 1'. Ähnlich der Vorrichtung 1 ist an einem vorderen Längsende 5' ein Verdichtungs- bzw. Schweissraum 8' ausgebildet. An einem hinteren Längsende 6' sind zwei Konverter 9a und 9b vorhanden, welche jeweils mit einem Aktor 9a.1 und 9b.1 auf gegenüberliegenden Seiten an einem als Achskörper ausgebildeten Torsionsschwinger 4' angreifen. Die Konverter 9a und 9b sind dabei senkrecht zu einer durch den Torsionsschwinger 4' definierten Torsionsachse B' angeordnet. Eine Längsachse A' der Vorrichtung 1' fällt vorliegend mit der Torsionsachse B' zusammen.

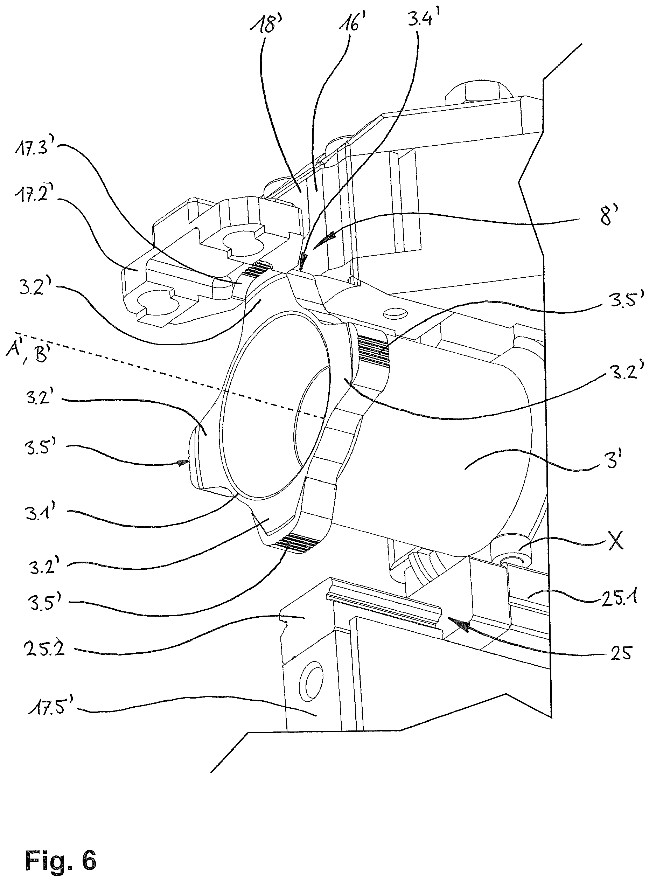

In Richtung zum vorderen Längsende 5' ist eine Sonotrode 3' am Torsionsschwinger 4' befestigt (in Fig. 5 nicht sichtbar, siehe z.B. Fig. 6). Ein Sonotrodenkopf 3.1' der Sonotrode 3' ist im Längsbereich des Verdichtungsraums 8' angeordnet und begrenzt diesen mit einer mantelseitig ausgebildeten Schweissfläche 3.4' in radialer Richtung zur Torsionsachse B' hin.

An einer Unterseite der Vorrichtung 1' ist ein pistolenartiger Griff 30 ausgebildet, an welchem die Vorrichtung 1' von einem Benutzer gehalten werden kann. Der Griff 30 weist ein Betätigungselement 30.1 auf, mit welchem ein Schweissvorgang ausgelöst werden kann.

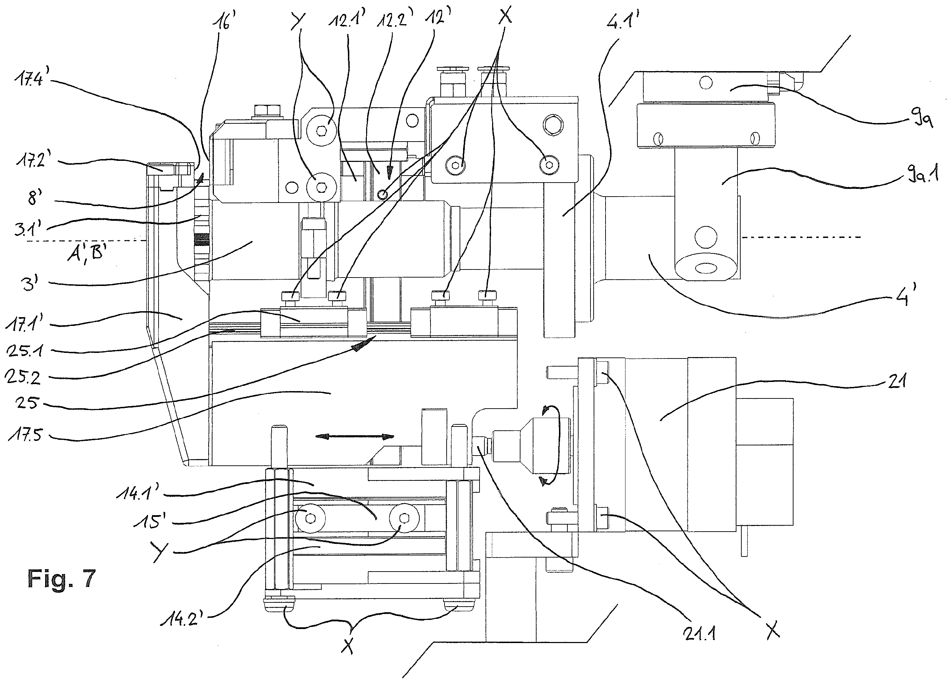

Der Verdichtungsraum 8' ist stirnseitig von einem äusseren Seitenschieber 17.2' begrenzt, welcher Teil einer in Richtung B' verschiebbar in der Vorrichtung 1' gelagerten Seitenschiebereinheit 17' ist (siehe Fig. 7). Die Seitenschiebereinheit 17' umfasst weiter einen Schieberträger 17.1', an welchem der äussere Seitenschieber 17.2' fest angebracht ist. Der Schieberträger 17.1' ist dem Sonotrodenkopf 3.1' in Richtung der Torsionsachse B' vorgelagert und erstreckt sich in einer Richtung senkrecht zu B' .

Bezüglich B' innenseitig, d.h. in Richtung zum Längsende 6' hin, ist der Verdichtungsraum 8' von einem inneren Seitenschieber 16' begrenzt, an welchem ein Amboss 18' in Richtung B' verschiebbar gelagert ist.

Figur 6 zeigt eine Ausschnittsänsicht der Vorrichtung 1' im Bereich des Sonotrodenkopfs 3.1', wobei zur besseren Übersichtlichkeit der Schieberträger 17.1' nicht dargestellt ist. Der Sonotrodenkopf 3.1' weist vier in radialer Richtung flanschartig auskragende Flügel 3.2' auf. Die Flügel 3.2' sind dabei kreuzweise in einem rechten Winkel zueinander angeordnet. An einem nach oben ragenden, dem Verdichtungsraum 8' zugewandten Flügel 3.2' ist mantelseitig die Schweissfläche 3.4' ausgebildet, welche den Verdichtungsraum 8' begrenzt. Die Schweissfläche 3.4' weist dabei parallel zur Torsionsachse B ausgerichtete Rillen auf, welche eine gute Übertragung der Sonotrodenschwingungen auf das im Verdichtungsraum 8' kompaktierte Schweissgut sicherstellen. Die weiteren Flügel 3.2 tragen jeweils eine baugleiche Schweissfläche 3.5'. Je nach Rotationsstellung der Sonotrode 3' am Torsionsschwinger 4' kann wahlweise jede der Schweissflächen 3.5' dem Verdichtungsraum 8' zugeordnet werden.

In Richtung der Torsionsachse B' hinter der Schweissfläche 3.4' ist der innere Seitenschieber 16' angeordnet und begrenzt den Verdichtungsraum 8' in Richtung nach hinten. In Richtung B' dem inneren Seitenschieber 16' gegenüberliegend ist der äussere Seitenschieber 17.1' angeordnet. Der Seitenschieber 17.1' weist eine Ausnehmung 17.3' auf, welche in Richtung der Torsionsachse B' einer Projektion des die Schweissfläche 3.4' tragenden Flügels 3.2' entspricht - Flügel 3.2' mit Schweissfläche 3.4' fluchtet somit im Wesentlichen mit der Ausnehmung 17.3'.

Aufgrund der Ausnehmung 17.3' kann der Seitenschieber 17.2' zum Verdichten des Schweissguts im Verdichtungsraum 8' in Richtung der Torsionsachse B' über der Schweissfläche 3.4' zum Seitenschieber 16' hin verschoben werden. Die Ausnehmung 17.3' ist dabei derart bemessen, dass ausreichend Raum für die Torsionsschwingung der Sonotrode 3' besteht, wenn der Flügle 3.2' mit der Schweissfläche 3.4' zumindest teilweise in der Ausnehmung 17.3' angeordnet ist. Die Ausnehmung 17.3' weist zudem eine der Schweissfläche 3.4' komplementär entsprechende Längsriffelung auf. Aufgrund der geringen Schwingungsamplituden kann der Seitenschieber 17.2' somit vergleichsweise nahe, mit einem nur geringen Spalt, an die Schweissfläche 3.4' heranreichen.

Wie aus Fig. 7 (unten) ersichtlich ist, ist der Seitenschieber 17.2' über den Schieberträger 17.1' starr mit einem Schieberwagen 17.5' verbunden, welcher unterhalb der Sonotrode 3' an einer Verschiebeführung 25 der Vorrichtung 1' gelagert ist. Die Verschiebeführung 25 umfasst dabei vorrichtungsfeste Führungselemente 25.1, an welchen eine fest mit dem Schieberwagen 17.5' verbundene Schiene 25.2 in Richtung der Torsionsachse B', bzw. vorliegend auch in Längsrichtung A', verschiebbar geführt gelagert ist. Der in Fig. 6 nicht dargestellte Schieberträger 17.1' erstreckt sich, stirnseitig den Sonotrodenkopf 3.1' überspannend, vom Schieberwagen 17.5' hin zum Seitenschieber 17.2' (siehe Fig. 7).

Figur 7 zeigt eine Seitenansicht der Vorrichtung 1', bei welcher die Sicht verdeckende Elemente zum Teil entfernt wurden. Ein zentraler Trägerkörper der Vorrichtung 1', an welchem die Komponenten der Vorrichtung 1' wie z.B. der Torsionsschwinger 4' über einen Spannring 4.1' direkt oder indirekt befestigt und/oder gelagert sind, ist aus Gründen der Übersichtlichkeit in Fig. 7 nicht dargestellt. Mit X bezeichnete Schrauben dienen zur Verankerung der entsprechenden Komponente am Trägerkörper. Derartige am Trägerkörper verankerte Komponenten sind auch als "vorrichtungsfest" bezeichnet.

Die bezüglich B' weitgehend unterhalb der Sonotrode 3' angeordneten Führungselemente 25.1 sind über die Schrauben X am Trägerkörper verankert. In den Führungselementen 25.1 ist die Führungsschiene 25.2 in Richtung der Torsionsachse B' verschiebbar gelagert. An der Schiene 25.3 ist der Schieberwagen 17.5' starr befestigt. In Richtung B' ist im Wesentlichen hinter dem Schieberwagen 17.5' ein Motor 21 über Schrauben X vorrichtungsfest angeordnet. Über eine Spindel 21.1 ist der Schieberwagen 17.5' vom Motor 21 in der Verschiebeführung in Richtung B' verschiebbar.

Der Schieberträger 17.1' ist stirnseitig am Schieberwagen 17.5' starr befestigt. In Richtung B' vor dem Sonotrodenkopf 3.1' erstreckt sich der Schieberträger 17.1' in einen Bereich beim Verdichtungsraum 8', wo der äussere Seitenschieber 17.2' am Schieberträger 17.1' starr befestigt ist. Über den Motor 21 kann der Seitenschieber 17.2' somit in Richtung B' zum inneren Seitenschieber 16' hin- oder von diesem weg verschoben werden. Damit kann zum Verdichten eine Längsdimension des Verdichtungsraums 8' verkleinert (bzw. zum Freigeben des Schweissguts vergrössert) werden.

Der Amboss 18' ist derart ausgebildet, dass er in ausgefahrenem Zustand einer Verschiebung des Seitenschiebers 17.2' folgt. Damit ist sichergestellt, dass beim Verdichten in jeder Verschiebestellung des Seitenschiebers 17.2' der Verdichtungsraum 8' radial nach aussen vollständig abgeschlossen ist.

Der Seitenschieber 16' ist an einem Wagen 13' in einer Richtung senkrecht zur Torsionsachse B' verschiebbar gelagert, sodass er in radialer Richtung zur Torsionsachse B' hin oder von dieser Weg verschoben werden kann. Aktuatoren 14.1' und 14.2' für die Verschiebung des Wagens 13' sind unterhalb der Sonotrode 3' (d.h. bezüglich B' dem Seitenschieber 16' weitgehend gegenüberliegend) angeordnet und mit Schrauben X am Trägerkörper fest verankert.

Im Gegensatz zu der stirnseitig angeordneten Längsführung 12 der Vorrichtung 1 des Wagens 13 ist eine funktional weitgehend entsprechende Längsführung 12' zur Führung des Wagens 13' bezüglich B' beidseitig der Sonotrode 3' angeordnet. Der Wagen 13' umfasst zu beiden Seiten eine aussen liegende Platte 13.1', welche den Seitenschieber 16' über Schrauben Y mit einem zwischen den Aktuatoren 14.1' und 14.2' angeordnetem Mitnehmerelement 15' wirkverbindet. Die Platten 13.1' sind jeweils an Läufern 12.1' der Längsführung 12' starr befestigt. Die Läufer 12.1' sind verschiebbar an Führungsschienen 12.2' geführt, welche senkrecht zu B' angeordnet und über Schrauben X vorrichtungsfest angebracht sind (in Fig. 7 sind Elemente der Längsführung 12' nur auf der blickabgewandten Seite dargestellt).

Beim Verdichten wirken die Aktuatoren 14.1' und 14.2' derart auf das Mitnehmerelement 15', dass der Wagen 13', und damit auch der Seitenschieber 16', nach unten zur Sonotrode 3' hin verschoben wird. Dabei wird eine Kompaktierfläche 18.1' des ausgefahrenen Amboss 18' zur Schweissfläche 3.4' hin bewegt. Der innere Seitenschieber 16' sowie der daran gelagerte Amboss 18' entsprechend somit in funktionaler Hinsicht im Wesentlichen den entsprechenden Elementen der Vorrichtung 1.

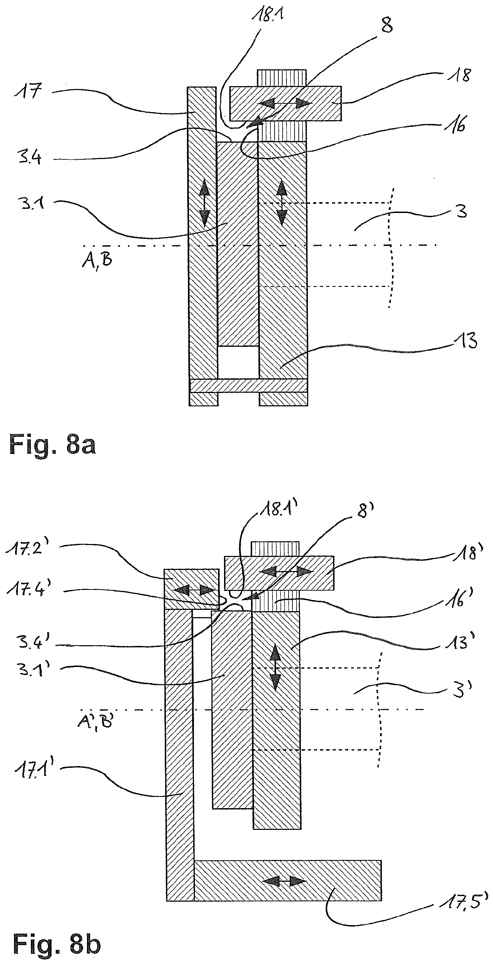

Figuren 8a und 8b zeigen eine schematische Schnittansicht des Verdichtungsraums 8 bzw. 8' der Vorrichtungen 1 bzw. 1'.

Figur 8a zeigt den Verdichtungsraum 8 der Vorrichtung 1. Der Verdichtungsraum 8 ist in Richtung der Torsionsachse B von den Seitenschiebern 16 und 17 begrenzt. Diese sind in Richtung von B an einer festen Längsposition derart beabstandet angeordnet, dass im Zwischenraum gerade der Sonotrodenkopf 3.1 Platz findet. Beide Seitenschieber 16 und 17 sind starr auf dem relativ zum Sonotrodenkopf 3.1 in senkrechter Richtung zu B verschiebbaren Wagen 13 angeordnet. Beim Verdichten werden beide Seitenschieber 16 und 17 in festem Längsabstand gemeinsam zur Torsionsachse B hin abgesenkt, wobei der ausgefahrene Amboss 18 mit seiner Kompaktierfläche 18.1 auf die Schweissfläche 3.4 abgesenkt wird. Beim Verdichten wird somit nur die Dimension des Verdichtungsraums 8 in Richtung senkrecht zu B verringert. Eine Längsdimension in Richtung von B ist durch den Sonotrodenkopf 3.1 vorgegeben.

Figur 8b zeigt den Verdichtungsraum 8' der Vorrichtung 1'. Der Verdichtungsraum 8' ist in Richtung der Torsionsachse B von den Seitenschiebern 16' und 17.2' begrenzt. Während der Seitenschieber 16' in Richtung von B' an einer festen Längsposition an die Schweissfläche 3.4' des Sonotrodenkopfs 3.1' angrenzend angeordnet ist, ist der Seitenschieber 17.2' in Richtung von B' oberhalb der Schweissfläche 3.4' in Richtung zum Seitenschieber 16' hin verschiebbar. Der Seitenschieber 16' ist dabei starr auf dem relativ zum Sonotrodenkopf 3.1' in senkrechter Richtung zu B' verschiebbaren Wagen 13' angeordnet. Beim Verdichten wird der Seitenschieber 16' zur Torsionsachse B' hin abgesenkt, wobei der am Seitenschieber 16 gelagerte, ausgefahrene Amboss 18' mit seiner Kompaktierfläche 18.1' auf die Schweissfläche 3.4' abgesenkt wird. Beim Verdichten wird zudem der Seitenschieber 17.2' in Richtung zum Seitenschieber 16' hin verschoben. Dies kann gleichzeitig mit oder sequenziell zu dem Absenken des Seitenschiebers 16' erfolgen. Der Amboss 18' wird dabei in Richtung B' mit verschoben und kann somit den Verdichtungsraum 8' nach oben vollständig abschliessen. Beim Verdichten wird somit sowohl die Dimension des Verdichtungsraums 8' in Richtung senkrecht zu B' als auch in Richtung von B', insbesondere unabhängig von einer entsprechenden Dimension des Sonotrodenkopfs 3.1', verringert.

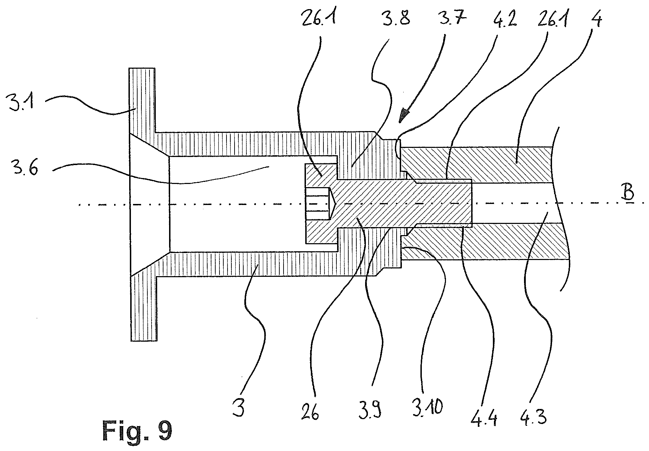

Figur 9 zeigt schematisch einen Ausschnitt einer Querschnittsansicht längs der Torsionsachse B (bzw. B') durch die Sonotrode 3 (bzw. 3') und den Torsionsschwinger 4 (bzw. 4').

Die Sonotrode 3 weist dabei vom Sonotrodenkopf 3.1 her ein Senkloch 3.6 auf, welches sich im Wesentlichen über die gesamte Länger der Sonotrode 3 in Richtung von B erstreckt. An einem Befestigungsende 3.7 der Sonotrode 3 ist das Senkloch 3.6 von einem Boden 3.8 abgeschlossen. Im Boden 3.8 ist eine durchgängige Bohrung 3.9 in Richtung B vorhanden, welche an einer stirnseitig ausgebildeten Befestigungsfläche 3.10 offen ist.

Mit der Befestigungsfläche 3.10 liegt die Sonotrode 3 an einer komplementär ausgebildeten Befestigungsfläche 4.2 am Torsionsschwinger 4 an. In einer Innenbohrung 4.3 weist der Torsionsschwinger 4 ein Innengewinde 4.4 auf.

Die Sonotrode 3 ist mit einer im Senkloch 3.6 angeordneten Schraube 26 am Torsionsschwinger 4 befestigt. Die Schraube 26 erstreckt sich durch die Bohrung 3.9 und ist mit einem Aussengewinde 26.1 in das Innengewinde 4.4 eingeschraubt. Ein Schraubenkopf 26.2 ist dabei im Senkloch 3.6 am Boden 3.8 abgestützt. Damit ergibt sich eine besonders einfache, von vorne her zugängliche Befestigungsweise der Sonotrode 3 am Torsionsschwinger 4 oder gegebenenfalls direkt an einem Konverter, wobei die Sonotrode 3 bezüglich einer Rotation um B einfach ausrichtbar und dann in dieser Position fixierbar ist.

## Patentansprüche

1. Vorrichtung (1, 1') zum Verschweissen von Metallteilen mittels Ultraschall, insbesondere zum Verschweissen von Litzen,
a.) umfassend eine Sonotrode (3, 3') mit einem Sonotrodenkopf (3.1, 3.1'), welcher von einem Schwingungserzeuger (9, 9a, 9b) in Torsionsschwingungen bezüglich einer Torsionsachse (B, B') anregbar ist, wobei
b.) am Sonotrodenkopf (3.1, 3.1') bezüglich der Torsionsachse (B) umfangsseitig wenigstens eine Schweissfläche (3.4, 3.4') angeordnet ist, und
c.) ein Amboss (18, 18') mit einer Kompaktierfläche (18.1, 18.1') vorhanden ist, welche gegenüber der Schweissfläche der Sonotrode (3, 3') bezüglich dieser feststehend anordenbar ist, wobei
d.) bei gegenüberliegender Anordnung die Schweissfläche (3.4, 3.4') und die Kompaktierfläche (18.1, 18.1') einen für die Aufnahme von zu verschweissenden Teilen vorgesehenen Verdichtungsraum (8, 8') in einer Richtung senkrecht zur Torsionsachse (B, B') begrenzen,
**dadurch gekennzeichnet, dass**
e.) die Sonotrode (3, 3') derart ausgebildet und mit dem Schwingungserzeuger (9, 9a, 9b) gekoppelt ist, dass die gesamte Sonotrode (3, 3') zu einer Torsionsschwingung mit vernachlässigbar kleinem Längsschwingungsanteil anregbar ist, indem
(i) der Schwingungserzeuger (9, 9a, 9b) zur Erzeugung von Längsschwingungen ausgebildet ist und senkrecht zur Torsionsachse (B, B') der Sonotrode (3, 3') angeordnet ist;
(ii) der Schwingungserzeuger (9, 9') über einen bezüglich der Torsionsschwingung mit der Sonotrode (3, 3') gekoppelten Torsionsschwinger (4, 4') mit der Sonotrode (3, 3') zusammenwirkt und
(iii) der Schwingungserzeuger (9) inen Aktor (9.1, 9a.1, 9b.1) aufweist, der in einem radialen Abstand von der Torsionsachse (B, B') am Torsionsschwinger (4, 4') angreift.

2. Vorrichtung (1) nach Anspruch 1, **dadurch gekennzeichnet, dass** die Sonotrode (3) eine einseitige Verschraubung aufweist, bei welcher bevorzugt eine Befestigungsschraube (26) in Richtung der Torsionsachse (B) vom Sonotrodenkopf (3.1) her an der Sonotrode (3) abgestützt in den Torsionsschwinger (4) eingeschraubt ist.

3. Vorrichtung nach einem der Ansprüche 1 und 2, **dadurch gekennzeichnet, dass** die Torsionsachse (B, B') mit einer Längsachse der Sonotrode (3, 3') zusammenfällt, insbesondere auch mit einer Längsachse des Torsionsschwingers (4, 4').

4. Vorrichtung nach einem der Ansprüche 1 bis 3, **dadurch gekennzeichnet, dass** der Sonotrodenkopf (3.1, 3.1') flanschartig an einem freien Ende der Sonotrode (3, 3') quer zur Torsionsachse (B, B') auskragt und sich insbesondere die Schweissfläche (3.4, 3.4') über die gesamte Längsdimension des Sonotrodenkopfs (3.1, 3.1') in Richtung der Torsionsachse (B, B') erstreckt.

5. Vorrichtung nach einem der Ansprüche 1 bis 4, **dadurch gekennzeichnet, dass** der Verdichtungsraum (8, 8') in Richtung der Torsionsachse (B, B') von einem äusseren (17, 17.2') und einem inneren Seitenschieber (16, 16') begrenzt ist und vorzugsweise in einer Richtung senkrecht zur Torsionsachse (B, B') durchgehend und nach aussen offen ausgebildet ist.

6. Vorrichtung nach Anspruch 5, **dadurch gekennzeichnet, dass** der Verdichtungsraum (8) zu beiden Seiten der Schweissfläche der Sonotrode (3) von den Seitenschiebern (16, 17) begrenzt ist und der Sonotrodenkopf (3.1) zumindest teilweise in einem Zwischenraum zwischen den Seitenschiebern (16, 17) angeordnet ist, wobei insbesondere ein Abstand der Seitenschieber (16, 17) in Richtung der Torsionsachse (B) einer Dimension des Sonotrodenkopfs (3.1) in dieser Richtung entspricht und wobei vorzugsweise der äussere Seitenschieber (17) der Sonotrode (3) in Richtung der Torsionsachse (B) dem Sonotrodenkopf (3.1) vorgelagert ist und vorzugsweise eine Stirnseite der Sonotrode (3) vollständig überdeckt.

7. Vorrichtung (1, 1') nach einem der Ansprüche 5 oder 6, **dadurch gekennzeichnet, dass** der innere (16) und der äussere Seitenschieber (17) bezüglich der Sonotrode (3) in einer Richtung senkrecht zur Torsionsachse (B) gemeinsam verschiebbar angeordnet sind, wobei vorzugsweise der innere (16) und der äussere (17) Seitenschieber gemeinsam an einem in senkrechter Richtung zur Torsionsachse (B) gegenüber der Sonotrode (3) verschiebbar geführten Wagen (13) gelagert sind, sodass bei einer Verschiebung des Wagens (13) der Sonotrodenkopf (3.1) in den Zwischenraum zwischen den Seitenschiebern (16, 17) ein- oder ausbringbar ist.

8. Vorrichtung (1') nach Anspruch 5 bis 7, **dadurch gekennzeichnet, dass** wenigstens einer der Seitenschieber (17.2') derart ausgebildet ist, dass er in Richtung der Torsionsachse (B') verschiebbar ist, wobei der wenigstens eine Seitenschieber (17.2') bevorzugt der äussere Seitenschieber (17.2') ist.

9. Vorrichtung nach Anspruch 8, **dadurch gekennzeichnet, dass** der wenigstens eine Seitenschieber (17.2') direkt oder indirekt an einer vorrichtungsfesten Verschiebeführung (25) in Richtung der Torsionsachse (B') verschiebbar gelagert ist, wobei zur Verschiebung ein Motor (21), bevorzugt ein elektrischer Motor (21), insbesondere mit einem Spindeltrieb (21.1), vorhanden ist.

10. Vorrichtung nach einem der Ansprüche 5 bis 9, **dadurch gekennzeichnet, dass** der Amboss (18, 18') am Wagen (13, 13') oder an einem der Seitenschieber (16, 17, 16', 17.2'), insbesondere am inneren Seitenschieber (16, 16'), gelagert ist, sodass der Amboss (18, 18') zusammen mit diesem Seitenschieber (16, 16') quer zur Torsionsachse (B, B') verschiebbar ist, wobei der Amboss (18, 18') derart angeordnet ist, dass er bei einer Verschiebung des Wagens (13, 13') oder des Seitenschiebers (16, 16') in einer Richtung zur Sonotrode (3, 3') hin verschiebbar ist.

11. Vorrichtung nach Anspruch 10, **dadurch gekennzeichnet, dass** der Amboss (18, 18') in Richtung parallel zur Torsionsachse (B, B') verschiebbar gelagert ist, sodass der Amboss (18, 18') in eine ausgefahrene Position bringbar ist, in welcher er in Längsrichtung (A, A') über den Seitenschieber (16, 16') übersteht und die Kompaktierfläche (18.1, 18.1') der Schweissfläche (3.4, 3.4') gegenüberliegt.

12. Mobiles Schweissgerät mit einer Vorrichtung (1) zum Ultraschallschweissen gemäss einem der vorigen Ansprüche.

13. Mobiles Schweissgerät nach Anspruch 12, **dadurch gekennzeichnet, dass** es über eine Versorgungsleitung an eine, insbesondere stationäre, Versorgungseinheit angeschlossen ist.

## Claims

1. A device (1, 1') for welding metal parts by means of ultrasound, in particular for welding strands,
a.) comprising a sonotrode (3, 3') with a sonotrode head (3.1, 3.1'), which can be excited by a vibration generator (9, 9a, 9b) to perform torsional vibrations in relation to a torsion axis (B, B'), wherein
b.) at least one welding surface (3.4, 3.4') is arranged circumferentially on the sonotrode head (3.1, 3.1'), as seen in relation to the torsion axis (B), and
c.) an anvil (18, 18') with a compacting surface (18.1, 18.1') is present, it being possible for this to be arranged opposite the welding surface of the sonotrode (3, 3'), in a fixed state in relation to the same, wherein
d.) in the case of an opposite arrangement, the welding surface (3.4, 3.4') and the compacting surface (18.1, 18.1') delimit a compacting space (8, 8'); provided for accommodating parts which are to be welded, in a direction perpendicular to the torsion axis (B, B'),
**characterized in that**
e.) the sonotrode (3, 3') is designed, and coupled to the vibration generator (9, 9a, 9b), such that the sonotrode (3, 3') as a whole can be excited to perform torsional vibration with a negligibly small longitudinal-vibration fraction by
(i) the vibration generator (9, 9a, 9b) being designed for generating longitudinal vibrations and arranged perpendicularly to the torsion axis (B, B') of the sonotrode (3, 3');
(ii) the vibration generator (9, 9'), for exciting the torsional vibrations, interacting with the sonotrode (3, 3') via a torsional vibrator (4, 4'), which is coupled to the sonotrode (3, 3') in respect of torsional vibration; and
(iii) the vibration generator (9) comprising an activator (9.1, 9a.1, 9b.1) which is in contact with the torsional vibrator (4, 4'), at a radial distance from the torsion axis (B, B')_.

2. The device (1) as claimed in claim 1, **characterized in that** the sonotrode (3) has a screw connection on one side, in the case of which preferably a fastening screw (26) is screwed into the torsional vibrator (4) in the direction of the torsion axis (B) so as to be supported on the sonotrode (3) from the sonotrode head (3.1).

3. The device as claimed in one of claims 1 and 2, **characterized in that** the torsion axis (B, B') coincides with a longitudinal axis of the sonotrode (3, 3'), in particular also with a longitudinal axis of the torsional vibrator (4, 4').

4. The device as claimed in one of claims 1 to 3, **characterized in that** the sonotrode head (3.1, 3.1') protrudes in a flange-like manner, transversely to the torsion axis (B, B'), at a free end of the sonotrode (3, 3'), and in particular the welding surface (3.4, 3.4') extends in the direction of the torsion axis (B, B') over the entire longitudinal dimension of the sonotrode head (3.1, 3.1').

5. The device as claimed in one of claims 1 to 4, **characterized in that** the compacting space (8, 8') is delimited by an outer lateral slide (17, 17.2') and an inner lateral slide (16, 16') in the direction of the torsion axis (B, B') and is preferably designed to be continuous, and to open outward, in a direction perpendicular to the torsion axis (B, B').

6. The device as claimed in claim 5, **characterized in that** the compacting space (8) is delimited by the lateral slides (16, 17) on either side of the welding surface of the sonotrode (3), and the sonotrode head (3.1) is arranged, at least in part, in an interspace between the lateral slides (16, 17), wherein in particular a distance between the lateral slides (16, 17) in the direction of the torsion axis (B) corresponds to a dimension of the sonotrode head (3.1) in this direction, and wherein preferably the outer lateral slide (17) of the sonotrode (3) is arranged in front of the sonotrode head (3.1), as seen in the direction of the torsion axis (B), and fully covers over preferably an end side of the sonotrode (3).

7. The device (1, 1') as claimed in either of claims 5 and 6, **characterized in that** the inner lateral slide (16) and the outer lateral slide (17) are arranged such that they can be jointly displaced in relation to the sonotrode (3) in a direction perpendicular to the torsion axis (B), wherein preferably the inner lateral slide (16) and the outer lateral slide (17) are mounted jointly on a carriage (13), which is guided such that it can be displaced in relation to the sonotrode (3) perpendicularly to the torsion axis (B), and therefore, during displacement of the carriage (13), the sonotrode head (3.1) can be introduced into the interspace between the lateral slides (16, 17) or moved out of the same.

8. The device (1') as claimed in claims 5 to 7, **characterized in that** at least one of the lateral slides (17.2') is defined such that it can be displaced in the direction of the torsion axis (B'), wherein the at least one lateral slide (17.2') is preferably the outer lateral slide (17.2').

9. The device as claimed in claim 8, **characterized in that** the at least one lateral slide (17.2') is mounted directly or indirectly on a device-mounted displacement guide (25) such that it can be displaced in the direction of the torsion axis (B'), wherein a motor (21), preferably an electric motor (21), in particular with a spindle drive (21.1), is present for displacement purposes.

10. The device as claimed in one of claims 5 to 9, **characterized in that** the anvil (18, 18') is mounted on the carriage (13, 13') or on one of the lateral slides (16, 17, 16', 17.2'), in particular on the inner lateral slide (16, 16'), and therefore the anvil (18, 18') can be displaced transversely to the torsion axis (B, B') together with said lateral slide (16, 16'), wherein the anvil (18, 18') is arranged such that it can be displaced in the direction of the sonotrode (3, 3') during displacement of the carriage (13, 13') or of the lateral slide (16, 16').

11. The device as claimed in claim 10, **characterized in that** the anvil (18, 18') is mounted such that it can be displaced in a direction parallel to the torsion axis (B, B'), and therefore the anvil (18, 18') can be moved into an extended position, in which it projects in the longitudinal direction (A, A') beyond the lateral slide (16, 16') and the compacting surface (18.1, 18.1') is located opposite the welding surface (3.4, 3.4').

12. A mobile welding apparatus having an ultrasonic welding device (1) as claimed in one of the preceding claims.

13. The mobile welding apparatus as claimed in claim 12, **characterized in that** it is connected to an in particular stationary supply unit via a supply line.

## Revendications

1. Dispositif (1, 1') pour souder des pièces métalliques au moyen d'ultrasons, notamment pour souder des torons,
a) comprenant une sonotrode (3, 3') munie d'une tête de sonotrode (3.1, 3.1'), laquelle peut être excitée par un générateur d'oscillations (9, 9a, 9b) en des oscillations torsionnelles par rapport à un axe de torsion (B, B'),
b) au moins une surface de soudage (3.4, 3.4') étant disposée sur la tête de sonotrode (3.1, 3.1') côté périphérique, et
c) une enclume (18, 18') munie d'une surface de compactage (18.1, 18.1') étant présente, laquelle peut être disposée par rapport à la surface de soudage de la sonotrode (3, 3') en position fixe en référence à celle-ci,
d) lors de l'arrangement en opposition mutuelle, la surface de soudage (3.4, 3.4') et la surface de compactage (18.1, 18.1') délimitent un espace de compression (8, 8'), destiné à accueillir des pièces à souder, dans une direction perpendiculaire à l'axe de torsion (B, B'),
**caractérisé en ce que**
e) la sonotrode (3, 3') est configurée et couplée avec le générateur d'oscillations (9, 9a, 9b) de telle sorte que la sonotrode (3, 3') toute entière peut être excitée en une oscillation torsionnelle avec une faible composante d'oscillation longitudinale négligeable, **en ce que**
(i) le générateur d'oscillations (9, 9a, 9b) est configuré pour générer des oscillations longitudinales et il est disposé perpendiculairement à l'axe de torsion (B, B') de la sonotrode (3, 3') ;
(ii) le générateur d'oscillations (9, 9') interagit avec la sonotrode (3, 3')' par le biais d'un oscillateur de torsion (4, 4') couplé à la sonotrode (3, 3') en référence à l'oscillation torsionnelle et
(iii) le générateur d'oscillations (9) possède un actionneur (9.1, 9a.1, 9b.1) qui agit sur l'oscillateur de torsion (4, 4') à une distance radiale de l'axe de torsion (B, B').

2. Dispositif selon la revendication 1, **caractérisé en ce que** la sonotrode (3) possède une liaison vissée unilatérale avec laquelle de préférence une vis de fixation (26) est vissée dans l'oscillateur de torsion (4) dans la direction de l'axe de torsion (B) depuis la tête de sonotrode (3.1) en prenant appui sur la sonotrode (3).

3. Dispositif selon la revendication 1 et 2, **caractérisé en ce que** l'axe de torsion (B, B') coïncide avec un axe longitudinal de la sonotrode (3, 3'), notamment aussi avec un axe longitudinal de l'oscillateur de torsion (4, 4').

4. Dispositif selon l'une des revendications 1 à 3, **caractérisé en ce que** la tête de sonotrode (3.1, 3.1') fait saillie transversalement à la manière d'une bride au niveau d'une extrémité libre de la sonotrode (3, 3') et en particulier la surface de soudage (3.4, 3.4') s'étend sur toute la cote de longueur de la tête de sonotrode (3.1, 3.1') dans la direction de l'axe de torsion (B, B').

5. Dispositif selon l'une des revendications 1 à 4, **caractérisé en ce que** l'espace de compression (8, 8') est délimité dans la direction de l'axe de torsion (B, B') par un curseur latéral extérieur (17, 17.2") et un curseur latéral intérieur (16, 16') et il est réalisé ouvert en continu et vers l'extérieur de préférence dans une direction perpendiculaire à de l'axe de torsion (B, B').

6. Dispositif selon la revendication 5, **caractérisé en ce que** l'espace de compression (8) est délimité par les curseurs latéraux (16, 17) vers les deux côtés de la surface de soudage de la sonotrode (3) et la tête de sonotrode (3.1) est au moins partiellement disposée dans un espace intermédiaire entre les curseurs latéraux (16, 17), un écart entre les curseurs latéraux (16, 17) dans la direction de l'axe de torsion (B) correspondant notamment à une dimension de la tête de sonotrode (3.1) dans cette direction et le curseur latéral extérieur (17) étant disposé devant la tête de sonotrode (3.1) dans la direction de l'axe de torsion (B) et recouvrant de préférence entièrement un côté frontal de la sonotrode (3) .

7. Dispositif (1, 1') selon l'une des revendications 5 ou 6, **caractérisé en ce que** les curseurs latéraux intérieur (16) et extérieur (17) sont disposés de manière à pouvoir coulisser ensemble par rapport à la sonotrode (3) dans une direction perpendiculaire à l'axe de torsion (B), les curseurs latéraux intérieur (16) et extérieur (17) étant de préférence supportés ensemble sur un chariot (13) guidé coulissant par rapport à la sonotrode (3) dans la direction perpendiculaire à l'axe de torsion (B), de sorte que lors d'un coulissement du chariot (13), la tête de sonotrode (3.1) peut être introduite dans l'espace intermédiaire entre les curseurs latéraux (16, 17) ou en être sortie.

8. Dispositif (1') selon l'une des revendications 5 à 7, **caractérisé en ce qu'**au moins l'un des curseurs latéraux (17.2') est configuré de telle sorte qu'il peut coulisser dans la direction de l'axe de torsion (B'), l'au moins un curseur latéral (17.2') étant de préférence le curseur latéral (17.2') extérieur.

9. Dispositif selon la revendication 8, **caractérisé en ce que** l'au moins un curseur latéral (17.2') est monté directement ou indirectement sur un guide de coulissement (25) fixé à demeure sur le dispositif de manière à pouvoir coulisser dans la direction de l'axe de torsion (B'), un moteur (21), de préférence un moteur électrique (21), notamment équipé d'un mécanisme à broche (21.1), étant présent pour le coulissement.

10. Dispositif (1') selon l'une des revendications 5 à 9, **caractérisé en ce que** l'enclume (18, 18') est montée sur le chariot (13, 13') ou sur l'un des curseurs latéraux (16, 17, 16', 17.2), notamment sur le curseur latéral intérieur (16, 16'), de sorte que l'enclume (18, 18'), conjointement avec ce curseur latéral (16, 16'), puisse coulisser perpendiculairement à l'axe de torsion (B, B"), l'enclume (18, 18') étant disposée de telle sorte que lors d'un coulissement du chariot (13, 13') ou du curseur latéral (16, 16'), elle peut coulisser dans une direction vers la sonotrode (3, 3').

11. Dispositif selon la revendication 10, **caractérisé en ce que** l'enclume (18, 18') est montée coulissante dans une direction parallèle à l'axe de torsion (B, B'), de sorte que l'enclume (18, 18') puisse être amenée dans une position sortie dans laquelle elle dépasse au-dessus du curseur latéral (16, 16') dans le sens longitudinal (A, A') et se trouve à l'opposé de la surface de compactage (18.1, 18.1') de la surface de soudage (3.4, 3.4').

12. Appareil de soudage mobile équipé d'un dispositif (1) de soudage aux ultrasons selon l'une des revendications précédentes.

13. Appareil de soudage mobile selon la revendication 12, **caractérisé en ce qu'**il est raccordé à une unité d'alimentation, notamment fixe, par le biais d'un câble d'alimentation.
